# EUROPEAN PATENT SPECIFICATION

(11) **EP 4 071 850 B1**
(45) Date of publication and mention of the grant of the patent: **17.04.2024**
(21) Application number: 20897488.1
(22) Date of filing: 25.11.2020
(51) Int. Cl.: H01M 4/1393, H01M 4/1395, H01M 4/36, H01M 4/38, H01M 4/587, H01M 10/0562, H01M 10/0567, H01M 4/48, H01M 10/0525

(54) **NONAQUEOUS ELECTROLYTE SECONDARY BATTERY**
SEKUNDÄRBATTERIE MIT WASSERFREIEM ELEKTROLYT
BATTERIE SECONDAIRE À ÉLECTROLYTE NON AQUEUX

(30) Priority: 06.12.2019 JP 2019221359
(43) Date of publication of application: 12.10.2022
(73) Proprietor: Panasonic Energy Co., Ltd., Osaka 570-8511 (JP)
(72) Inventor: TAKAI, Yasuyuki, Chuo-ku, Osaka-shi, Osaka 540-6207 (JP); KAIDUKA, Atsushi, Chuo-ku, Osaka-shi, Osaka 540-6207 (JP)
(74) Representative: Novagraaf International SA
(86) International application number: PCT/JP2020/043711
(87) International publication number: WO 2021/111932

(56) References cited:
- WO-A1-2017/111542
- WO-A1-2019/187537
- JP-A- 2007 242 411
- JP-A- 2007 242 411
- JP-A- 2015 049 965
- JP-A- 2018 156 787
- JP-A- 2019 507 460
- KR-A- 20170 039 976

## Description

### TECHNICAL FIELD

The present disclosure relates to a non-aqueous electrolyte secondary battery.

### BACKGROUND

A non-aqueous electrolyte secondary battery using a carbon material as a negative electrode active material is widely used as a secondary battery having a high energy density.

Patent Literature 1, for example, discloses a non-aqueous electrolyte secondary battery using densified carbon having an internal porosity of 5% or less as a carbon material.

Patent Literature 2, for example, discloses a non-aqueous electrolyte secondary battery using a carbon material containing a carbon material A having an internal porosity of 1% or more and less than 23% and a carbon material B having an internal porosity of 23% or more and 40% or less.

Meanwhile, Patent Literature 3 shows that a non-aqueous electrolyte secondary battery using a non-aqueous electrolyte solution containing a diisocyanate compound suppresses the amount of gas generated during high-temperature storage and suppresses the amount of swelling of the battery.
Patent Literature 4, for example, discloses a lithium secondary battery comprising a negative electrode comprising a first and a second active material layer. A first graphite-based active material shows an internal porosity of 50-90%, while the second active material is dense.

### CITATION LIST

### PATENT LITERATURE

Patent Literature 1: JP H9-320600 A
Patent Literature 2: JP 2014-67638 A
Patent Literature 3: JP 2007-242411 A
Patent Literature 4: KR 2017 0039976 A

### SUMMARY

### TECHNICAL PROBLEM

However, in order to further increase the capacity of the non-aqueous electrolyte secondary battery in the future, it is required to suppress the amount of swelling of the battery by further suppressing gas generation during high-temperature storage to ensure the safety of the battery.

The present disclosure has been made in view of the above, and an object of the present disclosure is to provide a non-aqueous electrolyte secondary battery capable of suppressing the amount of swelling of the battery due to gas generation during high-temperature storage.

### SOLUTION TO PROBLEM

A non-aqueous electrolyte secondary battery according to the present invention includes: a positive electrode; a negative electrode; and a non-aqueous electrolyte solution, wherein the negative electrode includes a negative electrode current collector and a negative electrode active material layer provided on the negative electrode current collector, the negative electrode active material layer contains graphite particles A and graphite particles B as a negative electrode active material, an internal porosity of the graphite particles A is 5% or less, and an internal porosity of the graphite particles B is 8% to 20%, the graphite particles A are contained more in a half region on an outer surface side of the negative electrode active material layer than in a half region on a negative electrode current collector side of the negative electrode active material layer when the negative electrode active material layer is divided into two equal parts in a thickness direction, and the non-aqueous electrolyte solution contains a diisocyanate compound.

### ADVANTAGEOUS EFFECTS OF INVENTION

According to an aspect of the present disclosure, it is possible to suppress the amount of swelling of a battery due to gas generation during high-temperature storage.

### BRIEF DESCRIPTION OF DRAWINGS

FIG. 1 is a cross-sectional view of a non-aqueous electrolyte secondary battery as an example of an embodiment.
FIG. 2 is a cross-sectional view of a negative electrode as an example of an embodiment.
FIG. 3 is a cross-sectional view of a graphite particle in a negative electrode active material layer.

### DESCRIPTION OF EMBODIMENTS

A non-aqueous electrolyte secondary battery according to an aspect of the present disclosure includes: a positive electrode; a negative electrode; and a non-aqueous electrolyte solution, wherein the negative electrode includes a negative electrode current collector and a negative electrode active material layer provided on the negative electrode current collector, the negative electrode active material layer contains graphite particles A and graphite particles B as a negative electrode active material, an internal porosity of the graphite particles A is 5% or less, and an internal porosity of the graphite particles B is 8% to 20%, the graphite particles A are contained more in a half region on an outer surface side of the negative electrode active material layer than in a half region on a negative electrode current collector side of the negative electrode active material layer when the negative electrode active material layer is divided into two equal parts in a thickness direction, and the non-aqueous electrolyte solution contains a diisocyanate compound.

It is considered that in a non-aqueous electrolyte solution containing a diisocyanate compound, the decomposition reaction of the non-aqueous electrolyte solution at the positive electrode in a high-temperature environment is suppressed as compared with a non-aqueous electrolyte solution containing no diisocyanate compound. In addition, it is considered that as in the present disclosure, the graphite particles A having an internal porosity of 5% or less are contained more in a half region on the outer surface side of the negative electrode active material layer than in a half region on the negative electrode current collector side of the negative electrode active material layer, so that the reactivity on the outer surface of the negative electrode active material layer is suppressed, and therefore the decomposition reaction of the non-aqueous electrolyte solution in the negative electrode in a high-temperature environment is suppressed. As described above, since the decomposition reaction of the non-aqueous electrolyte solution at the positive and negative electrodes in a high-temperature environment is suppressed, gas generation due to the decomposition reaction of the non-aqueous electrolyte solution is also suppressed, so that it is possible to suppress the amount of swelling of the battery due to gas generation during high-temperature storage.

Hereinafter, an example of an embodiment will be described in detail with reference to the drawings. The non-aqueous electrolyte secondary battery of the present disclosure is not limited to the embodiments described below. The drawings referred to in the description of the embodiments are schematically illustrated.

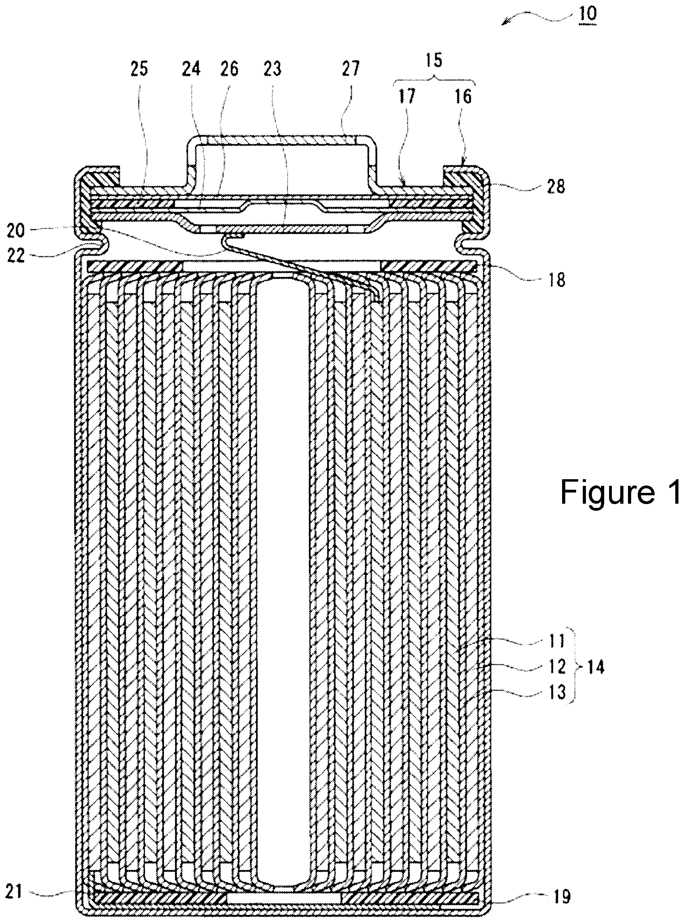

FIG. 1 is a cross-sectional view of a non-aqueous electrolyte secondary battery as an example of an embodiment. A non-aqueous electrolyte secondary battery 10 illustrated in FIG. 1 includes a wound electrode assembly 14 formed by winding a positive electrode 11 and a negative electrode 12 with a separator 13 interposed therebetween, a non-aqueous electrolyte solution, insulating plates 18 and 19 respectively disposed above and below the electrode assembly 14, and a battery case 15 housing the above-described members. The battery case 15 includes a bottomed cylindrical case body 16 and a sealing assembly 17 that closes an opening of the case body 16. Instead of the wound electrode assembly 14, another form of electrode assembly such as a stacked electrode assembly in which a positive electrode and a negative electrode are alternately stacked with a separator interposed therebetween may be applied. Examples of the battery case 15 include metal exterior cans having a cylindrical shape, a rectangular shape, a coin shape, a button shape, or the like, and a pouch exterior body formed by laminating a resin sheet and a metal sheet.

The case body 16 is, for example, a bottomed cylindrical metal exterior can. A gasket 28 is provided between the case body 16 and the sealing assembly 17 to secure the sealing property of the inside of the battery. The case body 16 has, for example, a protruding portion 22 which supports the sealing assembly 17 and in which a part of a side surface portion extends inward. The protruding portion 22 is preferably formed in an annular shape along the circumferential direction of the case body 16, and supports the sealing assembly 17 on the upper surface thereof.

The sealing assembly 17 has a structure in which a filter 23, a lower valve member 24, an insulating member 25, an upper valve member 26, and a cap 27 are stacked in this order from the electrode assembly 14 side. Each member constituting the sealing assembly 17 has, for example, a disk shape or a ring shape, and the members excluding the insulating member 25 are electrically connected to each other. The lower valve member 24 and the upper valve member 26 are connected to each other at each of the central portions thereof, and the insulating member 25 is interposed between the peripheral portions of these valve bodies. When the internal pressure of the non-aqueous electrolyte secondary battery 10 increases due to heat generation caused by an internal short circuit or the like, for example, the lower valve member 24 deforms and breaks so as to push up the upper valve member 26 toward the cap 27, and the current path between the lower valve member 24 and the upper valve member 26 is cut off. When the internal pressure further increases, the upper valve member 26 breaks, and the gas is discharged from the opening of the cap 27.

In the non-aqueous electrolyte secondary battery 10 illustrated in FIG. 1, a positive electrode lead 20 attached to the positive electrode 11 extends to the sealing assembly 17 side through a through hole of the insulating plate 18, and a negative electrode lead 21 attached to the negative electrode 12 extends toward the bottom side of the case body 16 through the outside of the insulating plate 19. The positive electrode lead 20 is connected to the lower surface of the filter 23 which is the bottom plate of the sealing assembly 17 by welding or the like, and the cap 27 which is the top plate of the sealing assembly 17 electrically connected to the filter 23 serves as a positive electrode terminal. The negative electrode lead 21 is connected to the inner surface of the bottom portion of the case body 16 by welding or the like, and the case body 16 serves as a negative electrode terminal.

Hereinafter, each component of the non-aqueous electrolyte secondary battery 10 will be described in detail.

### [Negative Electrode]

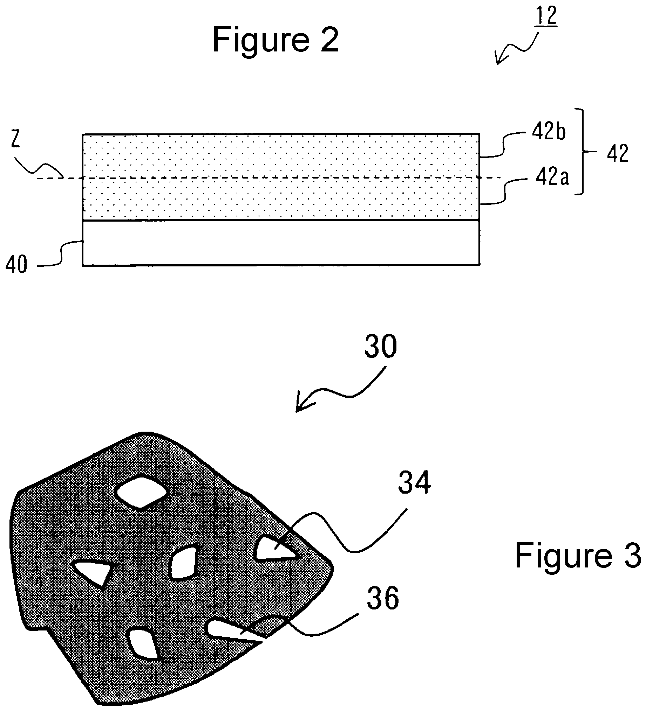

FIG. 2 is a cross-sectional view of a negative electrode as an example of an embodiment. The negative electrode 12 includes a negative electrode current collector 40 and a negative electrode active material layer 42 provided on the negative electrode current collector 40.

As the negative electrode current collector 40, for example, a foil of a metal which is stable in a potential range of the negative electrode, such as copper, a film in which the metal is disposed on a surface layer thereof, or the like is used.

The negative electrode active material layer 42 contains graphite particles as a negative electrode active material. The negative electrode active material layer 42 preferably contains a binder or the like. The negative electrode 12 can be produced, for example, by preparing a negative electrode mixture slurry containing a negative electrode active material, a binder, and the like, applying the negative electrode mixture slurry onto the negative electrode current collector 40, drying the slurry to form the negative electrode active material layer 42, and rolling the negative electrode active material layer 42. The method for producing the negative electrode active material layer 42 will be described later in detail.

FIG. 3 is a cross-sectional view of a graphite particle in a negative electrode active material layer. As illustrated in FIG. 3, a graphite particle 30 has a closed void 34 (hereinafter, internal void 34) that is not connected from the inside of the particle to the surface of the particle and a void 36 (hereinafter, external void 36) that is connected from the inside of the particle to the surface of the particle in the cross-sectional view of the graphite particle 30.

The graphite particle 30 in the present embodiment includes a graphite particle A having an internal porosity of 5% or less and a graphite particle B having an internal porosity of 8% to 20%. The internal porosity of the graphite particle A may be 5% or less, but is preferably 1% to 5%, and more preferably 3% to 5%, from the viewpoint of suppressing the amount of swelling of the battery due to gas generation during high-temperature storage. The internal porosity of the graphite particle B may be 8% to 20%, but is preferably 10% to 18%, and more preferably 12% to 16%, from the viewpoint of suppressing the amount of swelling of the battery due to gas generation during high-temperature storage. Here, the internal porosity of the graphite particle is a two-dimensional value obtained from the ratio of the area of the internal void 34 of the graphite particle to the cross-sectional area of the graphite particle. The internal porosity of the graphite particle is determined by the following procedure.

### <Method for Measuring Internal Porosity>

(1) The cross section of the negative electrode active material layer is exposed. Examples of the method for exposing the cross section include a method in which a part of the negative electrode is cut out and processed by an ion milling apparatus (for example, IM 4000 PLUS, manufactured by Hitachi High-Tech Corporation) to expose the cross section of the negative electrode active material layer.
(2) A reflected electron image of the cross section of the exposed negative electrode active material layer is taken using a scanning electron microscope. The magnification at the time of taking the reflected electron image is 3,000 times to 5,000 times.
(3) The cross-sectional image obtained as described above is taken into a computer, and binarized using image analysis software (for example, Imaged, manufactured by National Institutes of Health, USA.) to obtain a binarized image in which the particle cross section in the cross-sectional image is converted into black and voids present in the particle cross section are converted into white.
(4) Graphite particles A and B having a particle size of 5 µm to 50 µm are selected from the binarized image, and the area of the cross section of the graphite particle and the area of internal voids present in the cross section of the graphite particle are calculated. Here, the area of the cross section of the graphite particle refers to the area of a region surrounded by the outer periphery of the graphite particle, that is, the area of the entire cross section portion of the graphite particle. In addition, for voids having a width of 3 µm or less among voids present in the cross section of the graphite particle, it may be difficult to determine whether the voids are internal voids or external voids in image analysis, and thus voids having a width of 3 µm or less may be considered to be internal voids. Then, the internal porosity of the graphite particle (the area of the internal voids of the cross section of the graphite particle × 100/the area of the cross section of the graphite particle) is calculated from the calculated area of the cross section of the graphite particle and area of the internal voids of the cross section of the graphite particle. The internal porosities of the graphite particles A and B are an average value of 10 graphite particles A and graphite particles B.

The graphite particles A and B are produced, for example, as follows.

### <Graphite Particles A Having Internal Porosity of 5% or Less>

For example, coke (precursor) as a main raw material is pulverized into a predetermined size, the pulverized coke is aggregated with a binder, and then the coke is fired at a temperature of 2,600°C or higher to be graphitized and sieved to obtain graphite particles A having a desired size. Here, the internal porosity can be adjusted to 5% or less depending on the particle size of the precursor after pulverization, the particle size of the precursor in an aggregated state, and the like. The average particle size (volume-based median diameter D50) of the precursor after pulverization is preferably in the range of 12 µm to 20 µm, for example. When the internal porosity is reduced to 5% or less, it is preferable to increase the particle size of the precursor after pulverization.

### <Graphite Particles B Having Internal Porosity of 8% to 20%>

For example, coke (precursor) as a main raw material is pulverized into a predetermined size, the pulverized coke is aggregated with a binder, and then the coke is further pressure-formed into a block shape and then fired at a temperature of 2,600°C or higher to be graphitized. The block-shaped formed body after graphitization is pulverized and sieved to obtain graphite particles B having a desired size. Here, the internal porosity can be adjusted to 8% to 20% depending on the amount of the volatile component added to the block-shaped formed body. When a part of the binder added to the coke (precursor) volatilizes during firing, the binder can be used as a volatile component. As such a binder, pitch is exemplified.

The graphite particles A and B used in the present embodiment are natural graphite, artificial graphite, and the like, and are not particularly limited, but artificial graphite is preferable from the viewpoint of ease of adjusting the internal porosity and the like. The interplanar spacing (d₀₀₂) of the (002) plane of the graphite particles A and B used in the present embodiment as measured by a wide angle X-ray diffraction method is, for example, preferably 0.3354 nm or more, more preferably 0.3357 nm or more, and preferably less than 0.340 nm, more preferably 0.338 nm or less. In addition, the crystallite size (Lc (002)) of the graphite particles A and B used in the present embodiment determined by an X-ray diffraction method is, for example, preferably 5 nm or more, more preferably 10 nm or more, and preferably 300 nm or less, more preferably 200 nm or less. When the interplanar spacing (d₀₀₂) and the crystallite size (Lc (002)) satisfy the above ranges, the battery capacity of the non-aqueous electrolyte secondary battery tends to be larger than the case where the above ranges are not satisfied.

In the present embodiment, the graphite particles A are contained more in a region 42b which is a half region on the outer surface side than in a region 42a which is a half region on the negative electrode current collector side when the negative electrode active material layer 42 illustrated in FIG. 2 is divided into two equal parts in the thickness direction. As a result, for example, the decomposition reaction of the non-aqueous electrolyte solution in the negative electrode in a high-temperature environment is suppressed, and thus the amount of swelling of the battery due to gas generation during high-temperature storage is suppressed. The phrase "the negative electrode active material layer 42 is divided into two equal parts in the thickness direction" means that when the stacking direction of the negative electrode current collector 40 and the negative electrode active material layer 42 is defined as the thickness direction of the negative electrode active material layer 42, the negative electrode active material layer 42 is divided into two equal parts at an intermediate Z of the thickness of the negative electrode active material layer 42. Then, among the two equal parts divided in the thickness direction of the negative electrode active material layer 42, a part of the negative electrode active material layer 42 located close to the negative electrode current collector 40 is defined as the region 42a which is a half region on the negative electrode current collector side, and a part of the negative electrode active material layer 42 located far from the negative electrode current collector 40 is defined as a region 42b which is a half region on the outer surface side.

In the present embodiment, the graphite particles A may be contained more in the region 42b which is a half region on the outer surface side than in the region 42a which is a half region on the negative electrode current collector side, and from the viewpoint of suppressing the amount of swelling of the battery due to gas generation during high-temperature storage, the ratio of the graphite particles A to the graphite particles B in the region 42b which is a half region on the outer surface side is preferably 20 : 80 to 100 : 0, and more preferably 50 : 50 to 100 : 0 in mass ratio. Furthermore, the ratio of the graphite particles A to the graphite particles B in the region 42a which is a half region on the negative electrode current collector side is preferably 10 : 90 to 0 : 100, and more preferably 0 : 100 in mass ratio.

An example of a method for producing the negative electrode active material layer 42 will be described. For example, a negative electrode active material containing graphite particles B (as necessary, graphite particles A), a binder, and a solvent such as water are mixed to prepare a negative electrode mixture slurry for the negative electrode current collector side. Separately from this, a negative electrode active material containing graphite particles A (as necessary, graphite particles B) in an amount larger than that of the negative electrode mixture slurry for the negative electrode current collector side, a binder, and a solvent such as water are mixed to prepare a negative electrode mixture slurry for the outer surface side. Then, the negative electrode mixture slurry for the negative electrode current collector side is applied onto both surfaces of the negative electrode current collector and dried, and then the negative electrode mixture slurry for the outer surface side is applied onto both surfaces of the coating film of the negative electrode mixture slurry for the negative electrode current collector side and dried, whereby the negative electrode active material layer 42 can be formed. In the above method, the negative electrode mixture slurry for the negative electrode current collector side is applied and dried, and then the negative electrode mixture slurry for the outer surface side is applied, but a method of applying the negative electrode mixture slurry for the outer surface side after applying the negative electrode mixture slurry for the negative electrode current collector side and before drying may be used, or the negative electrode mixture slurry for the negative electrode current collector side and the negative electrode mixture slurry for the outer surface side may be applied simultaneously.

The negative electrode active material may contain other materials capable of reversibly absorbing and releasing lithium ions in addition to the graphite particles A and B used in the present embodiment, and may contain, for example, a Si-based material. Examples of the Si-based material include Si, alloys containing Si, and silicon oxides such as SiOₓ (x is 0.8 to 1.6). The Si-based material is a negative electrode material capable of improving the battery capacity as compared with the graphite particles. On the other hand, the Si-based material is disadvantageous in terms of charge-discharge cycle characteristics because the volume expansion of the Si-based material associated with charge and discharge is large. However, in the negative electrode active material layer having a negative electrode active material containing the graphite particles A and B and the Si-based material, when the amount of the graphite particles A is increased in the half region on the outer surface side rather than the half region on the negative electrode current collector side, deterioration of charge-discharge cycle characteristics may be effectively suppressed as compared with the case where the graphite particles A are uniformly dispersed in the negative electrode active material layer. The content of the Si-based material is, for example, preferably 1 mass% to 10 mass%, and more preferably 3 mass% to 7 mass%, with respect to the mass of the negative electrode active material, from the viewpoint of improving the battery capacity, suppressing deterioration of charge-discharge cycle characteristics, and the like.

Other examples of the other materials capable of reversibly absorbing and releasing lithium ions include metals alloyed with lithium, such as tin (Sn), and alloys and oxides containing metal elements such as Sn. The negative electrode active material may contain the other materials, and the content of the other material is desirably, for example, 10 mass% or less with respect to the mass of the negative electrode active material.

Examples of the binder include a fluorine resin, PAN, a polyimide resin, an acrylic resin, a polyolefin resin, styrene-butadiene rubber (SBR), nitrile-butadiene rubber (NBR), carboxymethyl cellulose (CMC) or a salt thereof, polyacrylic acid (PAA) or a salt thereof (PAA-Na, PAA-K, or the like, and partially neutralized salts may be used), and polyvinyl alcohol (PVA). These may be used singly or in combination of two or more types thereof.

### [Positive Electrode]

The positive electrode 11 includes, for example, a positive electrode current collector such as a metal foil and a positive electrode active material layer formed on the positive electrode current collector. As the positive electrode current collector, a foil of a metal which is stable in a potential range of the positive electrode, such as aluminum, a film in which the metal is disposed on a surface layer thereof, or the like can be used. The positive electrode active material layer contains, for example, a positive electrode active material, a binder, a conductive material, and the like.

The positive electrode 11 can be produced, for example, by applying a positive electrode mixture slurry containing a positive electrode active material, a binder, a conductive material, and the like onto a positive electrode current collector, drying the slurry to form a positive electrode active material layer, and then rolling the positive electrode active material layer.

Examples of the positive electrode active material include lithium transition metal oxides containing transition metal elements such as Co, Mn, and Ni. Examples of the lithium transition metal oxide include LiₓCoO₂, LiₓNiO₂, LiₓMnO₂, LiₓCo_{y}Ni_{1-y}O₂, LiₓCo_{y}M_{1-y}O₂, LiₓNi_{1-y}M_{y}O_{z}, LiₓMn₂O₄, LiₓMn_{2-y}M_{y}O₄, LiMPO₄, and Li₂MPO₄F (M; at least one of Na, Mg, Sc, Y, Mn, Fe, Co, Ni, Cu, Zn, Al, Cr, Pb, Sb, and B, 0 < x ≤ 1.2, 0 < y ≤ 0.9, 2.0 ≤ z ≤ 2.3). These may be used singly or in combination of two or more types thereof. The positive electrode active material preferably contains a lithium-nickel composite oxide such as LiₓNiO₂, LiₓCo_{y}Ni_{1-y}O₂, or LiₓNi_{1-y}M_{y}O_{z} (M; at least one of Na, Mg, Sc, Y, Mn, Fe, Co, Ni, Cu, Zn, Al, Cr, Pb, Sb, and B, 0 < x ≤ 1.2, 0 < y ≤ 0.9, 2.0 ≤ z ≤ 2.3) from the viewpoint of being able to increase the capacity of the non-aqueous electrolyte secondary battery.

Examples of the conductive material include carbon particles such as carbon black (CB), acetylene black (AB), Ketjen black, and graphite. These may be used singly or in combination of two or more types thereof.

Examples of the binder include fluorine resins such as polytetrafluoroethylene (PTFE) and polyvinylidene fluoride (PVdF), polyacrylonitrile (PAN), polyimide resins, acrylic resins, and polyolefin resins. These may be used singly or in combination of two or more types thereof.

### [Non-aqueous Electrolyte Solution]

The non-aqueous electrolyte solution contains a diisocyanate compound. When the non-aqueous electrolyte solution contains the diisocyanate compound, for example, the decomposition reaction of the non-aqueous electrolyte solution at the positive electrode in a high-temperature environment is suppressed, so that the amount of swelling of the battery due to gas generation during high-temperature storage is suppressed.

The diisocyanate compound is not particularly limited as long as it is a compound having two isocyanate groups in one molecule, but preferably includes a diisocyanate compound represented by a general formula: O=C=N-R-N=C=O where R is an aliphatic hydrocarbon group optionally having a hetero atom or an aromatic hydrocarbon group optionally having a hetero atom, from the viewpoint of effectively suppressing the amount of swelling of the battery due to gas generation during high-temperature storage. The aliphatic hydrocarbon group may be linear or branched.

The number of carbon atoms in the aliphatic hydrocarbon group is, for example, preferably in the range of 1 to 12, and more preferably in the range of 2 to 10. The number of carbon atoms in the aromatic hydrocarbon group is, for example, preferably in the range of 6 to 20, and more preferably in the range of 8 to 18. When the number of carbon atoms of the aliphatic hydrocarbon group and the number of carbon atoms of the aromatic hydrocarbon group is more than the above ranges, for example, the viscosity of the non-aqueous electrolyte solution is higher than that in the case where the number of carbon atoms of the aliphatic hydrocarbon group and the number of carbon atoms of the aromatic hydrocarbon group are within the above ranges, which may lead to an increase in resistance of the non-aqueous electrolyte secondary battery.

Examples of the aliphatic hydrocarbon group include an alkyl group, an alkenyl group, and an alkynyl group. Examples of the aromatic hydrocarbon group include a phenyl group, a tolyl group, a benzyl group, and a phenethyl group.

The aliphatic hydrocarbon group or the aromatic hydrocarbon group may have a hetero atom substituted with a hydrogen atom or a carbon atom. The hetero atom is not particularly limited, and examples thereof include boron, silicon, nitrogen, sulfur, fluorine, chlorine, and bromine.

Examples of the diisocyanate compound represented by the above general formula include 1,4-diisocyanate butane, 1,5-diisocyanate pentane, 1,6-diisocyanate hexane, 1,7-diisocyanate heptane, 1,8-diisocyanate octane, 1,9-diisocyanate nonane, 1,10-diisocyanate decane, toluene diisocyanate, xylene diisocyanate, tolylene diisocyanate, 1,3-bis(isocyanate methyl)cyclohexane, dicyclohexylmethane-1,1'-diisocyanate, dicyclohexylmethane-2,2'-diisocyanate, dicyclohexylmethane-3,3'-diisocyanate, dicyclohexylmethane-4,4'-diisocyanate, and isophorone diisocyanate. Among them, 1,6-diisocyanate hexane is preferable from the viewpoint of suppressing an increase in resistance of the non-aqueous electrolyte secondary battery while suppressing the amount of swelling of the battery due to gas generation during high-temperature storage. These may be used singly or in combination of two or more types thereof.

The content of the diisocyanate compound in the non-aqueous electrolyte solution is, for example, preferably in the range of 0.01 mass% to 3 mass%, more preferably in the range of 0.05 mass% to 2 mass%, and still more preferably in the range of 0.1 mass% to 1 mass%. When the content of the diisocyanate compound satisfies the above range, the amount of swelling of the battery due to gas generation during high-temperature storage can be suppressed while suppressing deterioration of battery characteristics as compared with the case where the above range is not satisfied.

The non-aqueous electrolyte solution contains an electrolyte salt. The electrolyte salt is preferably a lithium salt. Examples of the lithium salt include borates such as LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆₋ₓ(CₙF_{2n +} i)x (1 < x < 6, n is 1 or 2), LiB₁₀Cl₁₀, LiCl, LiBr, LiI, chloroborane lithium, lithium lower aliphatic carboxylate, Li₂B₄O₇, and Li(B(C₂O₄)F₂), and imide salts such as LiN(SO₂CF₃)₂ and LiN(CₗF_{2l + 1}SO₂)(CₘF_{2m + 1}SO₂) {l and m are integers of 0 or more}. These lithium salts may be used singly or in combination of two or more types thereof. Among them, LiPF₆ is preferably used from the viewpoint of ionic conductivity, electrochemical stability, and the like. The concentration of the lithium salt is preferably 0.8 to 1.8 mol per 1 L of the non-aqueous solvent.

The non-aqueous electrolyte solution contains, for example, a non-aqueous solvent that dissolves the electrolyte salt. As the non-aqueous solvent, for example, esters, ethers, nitriles such as acetonitrile, amides such as dimethylformamide, and mixed solvents of two or more types thereof can be used. The non-aqueous solvent may contain a halogen-substituted compound in which at least a part of hydrogen in these solvents is substituted with a halogen atom such as fluorine.

Examples of the esters include cyclic carbonic acid esters such as ethylene carbonate (EC), propylene carbonate (PC), and butylene carbonate; chain carbonic acid esters such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylic acid esters such as γ-butyrolactone and γ-valerolactone; and chain carboxylic acid esters such as methyl acetate, ethyl acetate, propyl acetate, methyl propionate (MP), and ethyl propionate.

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineol, and crown ether; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxy ethane,

1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

As the halogen-substituted compound, it is preferable to use a fluorinated cyclic carbonic acid ester such as fluoroethylene carbonate (FEC), a fluorinated chain carbonic acid ester, a fluorinated chain carboxylic acid ester such as methyl fluoropropionate (FMP), or the like.

### [Separator]

As the separator 13, for example, a porous sheet having ion permeability and insulating property is used. Specific examples of the porous sheet include a microporous thin film, a woven fabric, and a nonwoven fabric. As a material of the separator, an olefin resin such as polyethylene or polypropylene, cellulose, or the like is suitable. The separator 13 may be a laminate including a cellulose fiber layer and a thermoplastic resin fiber layer of an olefin resin or the like. In addition, a multilayer separator including a polyethylene layer and a polypropylene layer may be used, and a separator having a surface coated with a material such as an aramid resin or ceramic may be used.

### EXAMPLES

Hereinafter, the present disclosure will be further described with reference to examples, but the present disclosure is not limited to these examples.

### <Example 1>

### [Production of Positive Electrode]

As a positive electrode active material, aluminum-containing lithium nickel cobalt oxide (LiNi_{0.88}Co_{0.09}Al_{0.03}O₂) was used. First, 100 parts by mass of the positive electrode active material, 1 part by mass of acetylene black, and 0.9 parts by mass of polyvinylidene fluoride were mixed in a solvent of N-methyl-2-pyrrolidone (NMP) to prepare a positive electrode mixture slurry. This slurry was applied to both surfaces of an aluminum foil having a thickness of 15 µm, the coating film was dried, and then the coating film was rolled by a rolling roller to produce a positive electrode in which a positive electrode active material layer was formed on both surfaces of a positive electrode current collector. The produced positive electrode was cut to a width of 57.6 mm and a length of 679 mm and used.

### [Production of Graphite Particles A]

Coke was pulverized until the average particle size (median diameter D50) thereof reached 12 µm. Pitch as a binder was added to the pulverized coke, and the coke was aggregated until the average particle size (median diameter D50) thereof reached 17 µm. This aggregate was fired at a temperature of 2,800°C to be graphitized, and then sieved using a 250 mesh sieve to obtain graphite particles A having an average particle size (median diameter D50) of 23 µm.

### [Production of Graphite Particles B]

Coke was pulverized until the average particle size (median diameter D50) thereof reached 15 µm, pitch as a binder was added to the pulverized coke to aggregate the coke, and then a block-shaped formed body having a density of 1.6 g/cm³ to 1.9 g/cm³ was produced at an isotropic pressure. The block-shaped formed body was fired at a temperature of 2,800°C to be graphitized. Next, the graphitized block-shaped formed body was pulverized, and sieved using a 250 mesh sieve to obtain graphite particles B having an average particle size (median diameter D50) of 23 µm.

### [Production of Negative Electrode]

First, 40 parts by mass of the graphite particles A, 55 parts by mass of the graphite particles B, and 5 parts by mass of SiO were mixed, and the resulting mixture was used as a negative electrode active material A contained in the half region on the outer surface side of the negative electrode active material layer. The negative electrode active material A, carboxymethyl cellulose (CMC), and styrene-butadiene copolymer rubber (SBR) were mixed at a mass ratio of 100 : 1 : 1 to prepare a negative electrode mixture slurry for the outer surface side. Further, 95 parts by mass of the graphite particles B and 5 parts by mass of SiO were mixed, and the resulting mixture was used as a negative electrode active material B contained in the half region on the negative electrode current collector side of the negative electrode active material layer. The negative electrode active material B, carboxymethyl cellulose (CMC), and styrene-butadiene copolymer rubber (SBR) were mixed at a mass ratio of 100 : 1 : 1 to prepare a negative electrode mixture slurry for the negative electrode current collector side.

The negative electrode mixture slurry for the negative electrode current collector side was applied to both surfaces of a copper foil having a thickness of 8 µm, the coating film was dried, and then the negative electrode mixture slurry for the outer surface side was applied onto the coating film and dried, and the coating film was rolled by a rolling roller to produce a negative electrode in which a negative electrode active material layer was formed on both surfaces of the negative electrode current collector. That is, the mass ratio of the graphite particles A to the graphite particles B in the half region on the outer surface side of the negative electrode active material layer is 40 : 55, and the mass ratio of the graphite particles A to the graphite particles B in the half region on the negative electrode current collector side of the negative electrode active material layer is 0 : 100.
In the produced negative electrode, the internal porosities of the graphite particles A and B were measured to be 3% and 15%, respectively. The produced negative electrode was cut to a width of 58.6 mm and a length of 662 mm and used.

### [Preparation of Non-aqueous Electrolyte Solution]

In a non-aqueous solvent obtained by mixing ethylene carbonate (EC), methyl ethyl carbonate (MEC), and dimethyl carbonate (DMC) at a volume ratio of 20 : 5 : 75, LiPF₆ was dissolved at a concentration of 1.4 mol/L, and 3 mass% of vinylene carbonate and 0.5 mass% of 1,6-diisocyanate hexane were further added. This was used as a non-aqueous electrolyte solution.

### [Production of Non-aqueous Electrolyte Secondary Battery]

(1) A positive electrode lead made of aluminum was attached to the positive electrode current collector, and a negative electrode lead made of nickel-copper-nickel was attached to the negative electrode current collector, and then the positive electrode and the negative electrode were wound with a separator made of polyethylene interposed therebetween to produce a wound electrode assembly.
(2) Insulating plates were disposed above and below the electrode assembly, respectively, the negative electrode lead was welded to a case body, the positive electrode lead was welded to a sealing assembly, and the electrode assembly was housed in the case body.
(3) The non-aqueous electrolyte was injected into the case body by a decompression method, the open end of the case body was crimped to the sealing assembly via a gasket. This was used as a non-aqueous electrolyte secondary battery.

### <Comparative Example 1>

First, 95 parts by mass of the graphite particles B and 5 parts by mass of SiO were mixed, and the resulting mixture was used as a negative electrode active material C contained in the entire region of the negative electrode active material layer. The negative electrode active material C, carboxymethyl cellulose (CMC), and styrene-butadiene copolymer rubber (SBR) were mixed at a mass ratio of 100 : 1 : 1 to prepare a negative electrode mixture slurry. The negative electrode mixture slurry was applied to both surfaces of a copper foil having a thickness of 8 µm, the coating film was dried, and then the coating film was rolled by a rolling roller to prepare a negative electrode in which a negative electrode active material layer was formed on both surfaces of a negative electrode current collector. That is, the mass ratio of the graphite particles A to the graphite particles B in the half region on the outer surface side of the negative electrode active material layer is 0 : 100, and the mass ratio of the graphite particles A to the graphite particles B in the half region on the negative electrode current collector side of the negative electrode active material layer is 0 : 100. The produced negative electrode was cut to a width of 58.6 mm and a length of 662 mm and used.

In a non-aqueous solvent obtained by mixing ethylene carbonate (EC), methyl ethyl carbonate (MEC), and dimethyl carbonate (DMC) at a volume ratio of 20 : 5 : 75, LiPF₆ was dissolved at a concentration of 1.4 mol/L, and 3 mass% of vinylene carbonate was further added. This was used as a non-aqueous electrolyte solution. That is, in Comparative Example 1, a non-aqueous electrolyte solution containing no diisocyanate compound was used.

Using the negative electrode and the non-aqueous electrolyte solution, a non-aqueous electrolyte secondary battery was produced in the same manner as in Example 1.

### <Comparative Example 2>

A non-aqueous electrolyte secondary battery was produced in the same manner as in Example 1 except that the negative electrode produced in Comparative Example 1 was used.

### <Comparative Example 3>

A non-aqueous electrolyte secondary battery was produced in the same manner as in Example 1 except that the non-aqueous electrolyte solution prepared in Comparative Example 1 was used.

### [High-temperature Storage Test]

The non-aqueous electrolyte secondary batteries of Example 1 and Comparative Examples were charged up to 4.2 V at a constant current of 990 mA (0.3 hour rate) at an environmental temperature of 25°C, and then charged at a constant voltage of 4.2 V with a termination current of 66 mA. Thereafter, constant current discharge was performed up to 3.0 V at a constant current of 1,650 mA (0.5 hour rate). Then, the height of the central portion of the can bottom in the height direction of the battery based on the outer peripheral end portion of the can bottom of the case body was measured using a laser type displacement meter, and this was taken as the height of the central portion of the can bottom before storage.

Next, constant current charge was performed up to 4.2 V at a constant current of 990 mA (0.3 hour rate), constant voltage charge was performed at a constant voltage of 4.2 V with a termination current of 66 mA, and then the battery was stored in a thermostatic bath at 80°C for 3 days. Each non-aqueous electrolyte secondary battery after storage was taken out from the thermostatic bath, left for 1 hour, and then constant current discharge was performed up to 3.0 V at a constant current of 1,650 mA (0.5 hour rate) at an environmental temperature of 25°C. Then, the height of the central portion of the can bottom in the height direction of the battery based on the outer peripheral end portion of the can bottom of the case body was measured using a laser type displacement meter, and this was taken as the height of the central portion of the can bottom after storage.

Then, the amount of swelling of the battery was obtained by subtracting the height of the central portion of the can bottom before storage from the measured height of the central portion of the can bottom after storage, and summarized in Table 1. Here, the swelling of the battery is mainly caused by gas generation due to decomposition of the non-aqueous electrolyte solution during high-temperature storage. Therefore, as the amount of swelling of the battery obtained is small, gas generation during high-temperature storage is suppressed.

**[Table 1]**

| | Mass ratio of graphite particles A to graphite particles B | | Diisocyanate compound | Amount of swelling of battery |
|---|---|---|---|---|
| | Half region on outer surface side | Half region on negative electrode current collector side | | |
| Example 1 | A: B = 40:55 | A: B = 0:100 | Present | 0.029 mm |
| Comparative Example 1 | A: B = 0:100 | A: B = 0:100 | Absent | 0.042 mm |
| Comparative Example 2 | A: B = 0:100 | A: B = 0:100 | Present | 0.040 mm |
| Comparative Example 3 | A: B = 40:55 | A: B = 0:100 | Absent | 0.038 mm |

As can be seen from Table 1, the amount of swelling of the battery of Example 1 was smaller than those of Comparative Examples 1 to 3. That is, according to Example 1, the amount of swelling of the battery due to gas generation during high-temperature storage can be suppressed.

### REFERENCE SIGNS LIST

- 10: Non-aqueous electrolyte secondary battery
- 11: Positive electrode
- 12: Negative electrode
- 13: Separator
- 14: Electrode assembly
- 15: Battery case
- 16: Case body
- 17: Sealing assembly
- 18, 19: Insulating plate
- 20: Positive electrode lead
- 21: Negative electrode lead
- 22: Protruding portion
- 23: Filter
- 24: Lower valve member
- 25: Insulating member
- 26: Upper valve member
- 27: Cap
- 28: Gasket
- 30: Graphite particle
- 34: Internal void
- 36: External void
- 40: Negative electrode current collector
- 42: Negative electrode active material layer
- 42a: Half region on negative electrode current collector side
- 42b: Half region on outer surface side

## Claims

1. A non-aqueous electrolyte secondary battery (10) comprising: a positive electrode (11); a negative electrode (12); and a non-aqueous electrolyte solution, wherein
the negative electrode (12) includes a negative electrode current collector (40) and a negative electrode active material layer (42) provided on the negative electrode current collector (40),
the negative electrode active material layer (42) contains graphite particles A and graphite particles B as a negative electrode active material,
an internal porosity of the graphite particles A is 5% or less, and an internal porosity of the graphite particles B is 8% to 20%,
the graphite particles A are contained more in a half region (42b) on an outer surface side of the negative electrode active material layer (42) than in a half region (42a) on a negative electrode current collecting side of the negative electrode active material layer (42) when the negative electrode active material layer (42) is divided into two equal parts in a thickness direction, and
the non-aqueous electrolyte solution contains a diisocyanate compound.

2. The non-aqueous electrolyte secondary battery (10) according to claim 1, wherein the diisocyanate compound is represented by a general formula: O=C=N-R-N=C=O where R is an aliphatic hydrocarbon group optionally having a hetero atom or an aromatic hydrocarbon group optionally having a hetero atom.

3. The non-aqueous electrolyte secondary battery (10) according to claim 2, wherein the number of carbon atoms of the aliphatic hydrocarbon group is 1 to 12, and the number of carbon atoms of the aromatic hydrocarbon group is 6 to 20.

4. The non-aqueous electrolyte secondary battery (10) according to any one of claims 1 to 3, wherein a content of the diisocyanate compound in the non-aqueous electrolyte solution is in a range of 0.01 mass% to 3 mass%.

5. The non-aqueous electrolyte secondary battery (10) according to any one of claims 1 to 4, wherein the negative electrode active material contains a Si-based material.

## Patentansprüche

1. Sekundärbatterie (10) mit wasserfreiem Elektrolyt, umfassend: eine Positivelektrode (11); eine Negativelektrode (12); und eine wasserfreie Elektrolytlösung, wobei
die Negativelektrode (12) einen Negativelektroden-Stromkollektor (40) und eine Negativelektroden-Aktivmaterialschicht (42) umfasst, die auf dem Negativelektroden-Stromkollektor (40) bereitgestellt ist,
die Negativelektroden-Aktivmaterialschicht (42) Graphitpartikel A und Graphitpartikel B als ein Negativelektroden-Aktivmaterial enthält,
eine innere Porosität der Graphitpartikel A 5% oder niedriger beträgt und eine innere Porosität der Graphitpartikel B 8% bis 20% beträgt,
die Graphitpartikel A mehr in einer Halbregion (42b) auf einer äußeren Oberflächenseite der Negativelektroden-Aktivmaterialschicht (42) als in einer Halbregion (42a) auf einer Negativelektroden-Stromkollektorseite der Negativelektroden-Aktivmaterialschicht (42) enthalten sind, wenn die Negativelektroden-Aktivmaterialschicht (42) in zwei gleiche Teile in einer Dickenrichtung geteilt ist, und
die wasserfreie Elektrolytlösung eine Diisocyanat-Verbindung enthält.

2. Sekundärbatterie (10) mit wasserfreiem Elektrolyt nach Anspruch 1, wobei die Diisocyanat-Verbindung dargestellt ist durch eine allgemeine Formel: O=C=N-R-N=C=O, wo R eine aliphatische Kohlenwasserstoffgruppe, die wahlweise ein Heteroatom aufweist, oder eine aromatische Kohlenwasserstoffgruppe ist, die wahlweise ein Heteroatom aufweist.

3. Sekundärbatterie (10) mit wasserfreiem Elektrolyt nach Anspruch 2, wobei die Anzahl von Kohlenstoffatomen der aliphatischen Kohlenwasserstoffgruppe 1 bis 12 beträgt und die Anzahl von Kohlenstoffatomen der aromatischen Kohlenwasserstoffgruppe 6 bis 20 beträgt.

4. Sekundärbatterie (10) mit wasserfreiem Elektrolyt nach einem der Ansprüche 1 bis 3, wobei ein Gehalt der Diisocyanat-Verbindung in der wasserfreien Elektrolytlösung in einem Bereich von 0,01 Ma% bis 3 Ma% liegt.

5. Sekundärbatterie (10) mit wasserfreiem Elektrolyt nach einem der Ansprüche 1 bis 4, wobei das Negativelektroden-Aktivmaterial ein Material auf Si-Basis enthält.

## Revendications

1. Batterie rechargeable à électrolyte non aqueux (10) comprenant : une électrode positive (11) ; une électrode négative (12) ; et une solution d'électrolyte non aqueux, dans laquelle
l'électrode négative (12) inclut un collecteur de courant d'électrode négative (40) et une couche de matériau actif d'électrode négative (42) disposée sur le collecteur de courant d'électrode négative (40),
la couche de matériau actif d'électrode négative (42) contient des particules de graphite A et des particules de graphite B en tant que matériau actif d'électrode négative,
la porosité interne des particules de graphite A est de 5 % ou moins, et la porosité interne des particules de graphite B est de 8 % à 20 %,
les particules de graphite A sont contenues davantage dans une demi-région (42b) sur le côté surface extérieure de la couche de matériau actif d'électrode négative (42) que dans une demi-région (42a) sur le côté collecteur de courant d'électrode négative de la couche de matériau actif d'électrode négative (42) quand la couche de matériau actif d'électrode négative (42) est divisée en parties égales dans la direction de l'épaisseur, et
la solution d'électrolyte non aqueux contient un composé diisocyanate.

2. Batterie rechargeable à électrolyte non aqueux (10) selon la revendication 1, dans laquelle le composé diisocyanate est représenté par la formule générale : O=C=N-R-N=C=O où R est un groupe hydrocarboné aliphatique ayant éventuellement un hétéroatome ou un groupe hydrocarboné aromatique ayant éventuellement un hétéroatome.

3. Batterie rechargeable à électrolyte non aqueux (10) selon la revendication 2, dans laquelle le nombre d'atomes de carbone du groupe hydrocarboné aliphatique est de 1 à 12, et le nombre d'atomes de carbone du groupe hydrocarboné aromatique est de 6 à 20.

4. Batterie rechargeable à électrolyte non aqueux (10) selon l'une quelconque des revendications 1 à 3, dans laquelle la teneur en le composé diisocyanate dans la solution d'électrolyte non aqueux est située dans la plage allant de 0,01 % en masse à 3 % en masse.

5. Batterie rechargeable à électrolyte non aqueux (10) selon l'une quelconque des revendications 1 à 4, dans laquelle le matériau actif d'électrode négative contient un matériau à base de Si.
